# EUROPEAN PATENT APPLICATION

(11) **EP 3 015 212 A1**
(43) Date of publication of application: **04.05.2016**
(21) Application number: 14814093.2
(22) Date of filing: 17.06.2014
(51) Int. Cl.: B23K 9/073

(54) **MODULAR WELDING MACHINE**

(30) Priority: 17.06.2013 KR 20130068779; 16.06.2014 KR 20140072833
(71) Applicant: Daewoo Shipbuilding & Marine Engineering Co., Ltd., Seoul 100-180 (KR)
(72) Inventor: LEE, Weon Gu, Geoje-si Gyeongsangnam-do 656-938 (KR); KIM, Young Joo, Geoje-si Gyeongsangnam-do 656-130 (KR); CHO, Bang Hyun, Busan 607-785 (KR); AHN, Woo Young, Geoje-si Gyeongsangnam-do 656-080 (KR)
(74) Representative: Ipside
(86) International application number: PCT/KR2014/005276
(87) International publication number: WO 2014/204160

(57) **Abstract**

Disclosed is a modular welding machine which can effectively recover heat generated from each individual welding machine, by applying a lightened and simplified water-cooled cooling structure. The modular welding machine is provided in a plural number to perform a plurality of welding processes in multi positions, wherein each of component parts configuring the welding machine is modularized into groups to thereby be configured on a single panel and is installed within a single case. In addition, the modular welding machine can perform a plurality of welding processes in multi positions and comprises a plurality of individual welding machine modules, in each of which a cooling plate according to a water-cooled method is installed, the cooling plate having a flow path in which the cooling water circulates for cooling the heat-radiating parts. Therefore, a micro-miniature and micro-light water-cooled modular welding machine can be manufactured with approximately at least 20 % increased welding power efficiency by circulating stable cooling water to each water-cooled individual welding machine module to prevent heat generation of a welding machine power conversion element, and with omitting an air-cooled heat-radiating part which takes 70 % of the entire volume of an air-cooled module welding machine.

## Description

### [Technical Field]

The present invention relates to a modular welding machine, and more particularly, to a modular welding machine that modulates a plurality of high frequency inverter type welding machines having excellent arc welding properties.

### [Background Art]

Generally, components required for making one welding machine are accommodated in one box-shaped casing. So as to improve welding processes including welding quality and welding productivity, in this case, it is necessary that an analog type (SCR type) welding machine is replaced with an inverter type welding machine. However, the price of the inverter type welding machine is relatively higher than that of the SCR type welding machine, and accordingly, it is difficult to replace the SCR type welding machine with the inverter type welding machine.

Even if the inverter type welding machine has better welding properties and power consumption efficiencies than the SCR type welding machine, the inverter type welding machine does not give many economical advantages due to high manufacturing costs, and accordingly, the inverter type welding machine is used limitedly at the places where a large number of welding machines are used like shipbuilding factories or steel structure-making factories and at the fields where the reliability for the welding quality is needed like automatic facilities.

Recently, environmental problems and energy problems have been emerged as global problems, and further, an electricity fee system like realistic level of power rates, reduction of differentiation by purpose, and electricity pricing by season and time is reformed to cause big changes in power energy. Since relatively low-priced industrial power is used in the past, there is no need to make a study of the high efficiency in a welding machine, but recently, since power supply and demand problems occur and power rates are continuously increased, many studies on the development and application of high efficiency welding machines capable of reducing power rates will be made in the future.

In conventional practice, on the other hand, an air-cooled single welding machine using fans is configured to accommodate components comprising a welding machine into a single casing. After manufactured, generally, SCR type welding machines have a weight of 170 to 200 kg and a size of 500 mm(W) x 684 mm (D) x 845 mm(H), so that they are relatively heavy and bulky. Contrarily, inverter type welding machines have different weights and sizes from each other since the sizes of transformers are varied in accordance with the frequencies used. In this case, the inverter type welding machines generally have a weight of about 100 kg at a frequency of 20 KHz and about 50 kg at a frequency of 70 to 100 KHz and a size of 400 mm(W) x 630 mm (D) x 480 mm(H), so that they are lightweight. However, if it is desired to make a modular welding machine in which a plurality of lightweight inverter type welding machines is embedded, the modular welding machine should be smaller in size and lighter in weight so that the individual inverter type welding machines can be detachably mounted and handled by means of one worker.

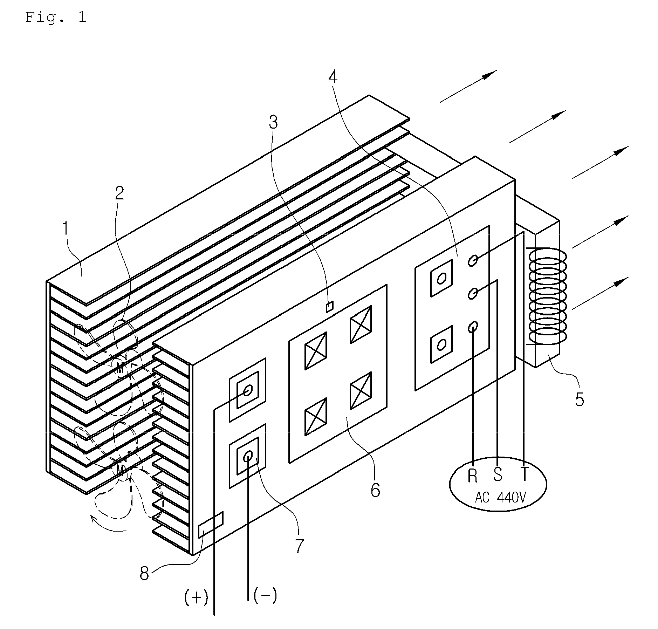

FIG.1 is a perspective view showing a conventional air-cooled inverter type welding machine.

Referring to FIG.1, generally, one air-cooled inverter type welding machine is made in the conventional practice, and components constituting the welding machine are located in one box. Since the air-cooled inverter type welding machine has a high switching control frequency, the heat generated from the internal electronic components is forcedly air-cooled. Input and output diodes 4 and 7 and an IGBT PCB 6 as the internal electronic components are attached to heat-radiating plates 1.

The heat-radiating plates 1 serve to supply cool air to the interiors thereof through the rotation of air cooling fans 2 to allow the internal electronic components like the input and output diodes 4 and 7 and the IGBT PCB 6 to be maintained at a low temperature and further to allow a transformer 5 located at the outlet of the heat-radiating plates 1 to be cooled. A reference numeral 3 not explained yet indicates a heat-radiating plate temperature sensor, and 8 indicates a current sensor.

According to the conventional air-cooled inverter type welding machine, however, the efficiencies of the air cooling fans 2 are low, and the size of the heat-radiating plates 1 corresponds to 70% or more of the whole size of the welding machine. Accordingly, if a plurality of air-cooled inverter type welding machine is modularized, the size and weight of the welding machine may be increased. Further, a large number of components are needed to operate one air-cooled inverter type welding machine, thus failing to achieve the miniaturization of the air-cooled inverter type welding machine.

### [Disclosure]

### [Technical Problem]

Accordingly, the present invention has been made in view of the above-mentioned problems occurring in the prior art, and it is an object of the present invention to provide a modular welding machine wherein a plurality of high frequency inverter type welding machines having excellent arc welding properties and power consumption efficiencies is adopted, and the components constituting the plurality of welding machines are modularized and integrated into a single casing, thus reducing the number of components thereof, decreasing the manufacturing cost thereof, and raising the power consumption efficiencies thereof.

It is another object of the present invention to provide a modular welding machine wherein a lightweight and simple water-cooled cooling structure is adopted, thus efficiently collecting the heat generated from individual welding machines.

### [Technical Solution]

To accomplish the above-mentioned objects, according to a first aspect of the present invention, there is provided a modular welding machine including a plurality of welding machines for performing welding in multiple positions, wherein components constituting the respective welding machines are modularized into groups in such a manner as to be located on a single panel and the modularized welding machines are accommodated in a single casing.

According to the present invention, desirably, the modular welding machine further includes a high frequency inverter module having a water-cooled pump and a heat exchanger adapted to cool the heat generated from a plurality of switching elements in the process wherein a DC voltage is switched at a high speed to pulses and then converted into an AC voltage.

According to the present invention, desirably, the modular welding machine further includes: in the single casing, a power supply module for supplying control power having the capacity corresponding to the number of welding machines; a main controller for controlling all welding properties; a high frequency transformer module for controlling and supplying welding current and voltage; a reactor module for stabilizing output current; and output terminals for connecting wire feeders and torches.

According to the present invention, desirably, the main controller includes a first main controller and a second main controller, and if one of the first main controller and the second main controller is not operated, the other is operated, and otherwise, the first main controller and the second main controller are separated from the plurality of welding machines.

According to the present invention, desirably, the modular welding machine further includes, in the exterior of the casing, a plurality of welding output terminals and a plurality of welding control terminals having the corresponding numbers to the number of welding machines located in the interior of the casing.

According to the present invention, desirably, the plurality of switching elements comes into contact with at least one surface of a plate-shaped tube having a passage formed therein in such a manner as to flow water therealong, and both ends of the plate-shaped tube are connected to a cooling water line on which the water-cooled pump and the heat exchanger are disposed.

According to the present invention, desirably, a plurality of plate-shaped tubes is branched from the cooling water line in parallel with each other to form a plurality of passages, and the switching elements are located on each plate-shaped tube.

To accomplish the above-mentioned objects, according to a second aspect of the present invention, there is provided a modular welding machine including a plurality of individual welding machine modules for performing welding in multiple positions, wherein each individual welding machine module has a water-cooled cooling plate adapted to cool heat-generating components, the cooling plate having a passage formed therein to circulate cooling water.

According to the present invention, desirably, the cooling plate has input diodes, an IGBT PCB, a water-cooled transformer, an output diode and a current sensor, as components of each individual welding machine module, disposed sequentially thereon.

According to the present invention, desirably, the cooling plate further has a cooling plate temperature sensor disposed thereon so as to sense a temperature of the cooling plate.

According to the present invention, desirably, the cooling plate has input diodes, an IGBT PCB, a water-cooled transformer, an output diode, a current sensor, and a cooling plate temperature sensor, as components of each individual welding machine module, distributedly arranged on both surfaces thereof.

According to the present invention, desirably, the individual welding machine modules have a shape of a detachably mounted box on a single casing.

According to the present invention, desirably, the modular welding machine further including a water cooling unit having a double shaft motor, a water pump connected to one shaft of the double shaft motor, a cooling fan connected to the other shaft of the double shaft motor, a water tank for storing cooling water, and a radiator for radiating heat through the rotation of the cooling fan, wherein the cooling water flowing from the water tank is supplied to the cooling plates of the individual welding machine modules through an inlet distribution pipe, circulated along the passages of the cooling plates, passed through the radiator through an outlet distribution pipe, and collected to the water tank.

According to the present invention, desirably, the cooling plate has the input and output diodes, the IGBT PCB, the water-cooled transformer and the current sensor attached thereto, and each individual welding machine module has an individual welding machine module controller, a main power supply part for power supply, an on/off switch, a terminal part having output current terminals, and a manipulation panel.

According to the present invention, desirably, the modular welding machine further includes a welding shielding gas supply structure having a welding shielding gas distribution pipe, solenoid valves mounted on the welding shielding gas distribution pipe at positions corresponding to the terminal parts of the individual welding machine modules, and gas lines connected from the terminal parts to the external welding torches, wherein the solenoid valves connected to the individual welding machine module controllers receive the on/off signals of the welding torches and operate according to the received signals.

According to the present invention, desirably, each cooling plate and the water cooling unit are connected with each other by means of a nipple and a coupler attached to the inlet distribution pipe and the outlet distribution pipe, and the inlet distribution pipe and the outlet distribution pipe are located inside a sealing partition wall.

### [Advantageous Effects]

According to the present invention, the modular welding machine can save welding power energy through the high efficiency of the welding machine in consideration of external environments and can modularize a plurality of welding machines to achieve manufacturing cost saving, power cable reduction, and welding machine slimming. Further, the modular welding machine can be located near a workplace to reduce the length of a welding cable, thus increasing welding efficiencies, achieving manufacturing cost saving, and providing excellent arc welding properties to improve welding quality, and the modular welding machine can provide welding intelligence at optimal conditions wherein welding characteristics by welding posture and material are considered, so that welding can be easily performed by anyone, thus improving the productivity of the modular welding machine.

Moreover, the modular welding machine is configured wherein stable cooling water is circulated along the water-cooled individual welding machine modules to prevent the generation of heat from power conversion elements, so that welding power efficiency is increased by about 20% or more, and the air-cooled heat radiating components occupying about 70% of the whole size of the air-cooled modular welding machine are not required anymore, thus allowing the modular welding machine to be very small and lightweight.

Moreover, the modular welding machine can reduce the manufacturing cost through the integration of power units and the removal of heat radiating components and can remove the limitation in the installation space thereof through the optimal arrangements of the individual welding machine modules. Further, the modular welding machine is small and lightweight, so that it can be installed near the workplace, thus reducing the length of the welding cable to prevent welding power from being lost. Moreover, the modular welding machine can increase the maintenance efficiencies through fault history indication and can achieve welding power saving and improvement in welding quality when applying the inverter type welding machine rather than the SCR type welding machine.

### [Description of Drawings]

FIG.1 is a perspective view showing a conventional air-cooled inverter type welding machine.
FIG.2 is a schematic view showing a configuration of a modular welding machine according to a first embodiment of the present invention.
FIG.3 is a schematic view showing the internal configuration of the modular welding machine according to the first embodiment of the present invention.
FIG.4 is a schematic view showing a water-cooled system of the modular welding machine according to the first embodiment of the present invention.
FIG.5 is a schematic view showing another water-cooled system of FIG.4.
FIG.6 is a schematic view showing the internal configuration of the modular welding machine of FIG.3.
FIG.7 is a schematic view showing a configuration of a modular welding machine according to a second embodiment of the present invention.
FIG.8 is a front view showing an external configuration of a modular welding machine according to a third embodiment of the present invention.
FIG.9 is a front view showing an internal configuration of the modular welding machine according to the third embodiment of the present invention.
FIG.10 is a perspective view showing an individual welding machine module in the modular welding machine according to the third embodiment of the present invention.
FIG.11 is a plan view showing the individual welding machine module in the modular welding machine according to the third embodiment of the present invention.
FIG.12 is a front view showing the individual welding machine module in the modular welding machine according to the third embodiment of the present invention.
FIG.13 is a schematic view showing a water-cooled unit in the modular welding machine according to the third embodiment of the present invention.
FIG.14 is a plan view showing the internal configuration of the modular welding machine according to the third embodiment of the present invention.
FIG.15 is a left side view showing the internal configuration of the modular welding machine according to the third embodiment of the present invention.
FIG.16 is a right side view showing the internal configuration of the modular welding machine according to the third embodiment of the present invention.

### [Mode for Invention]

Hereinafter, the technological configuration of a modular welding machine according to the present invention will be in detail described with reference to drawings.

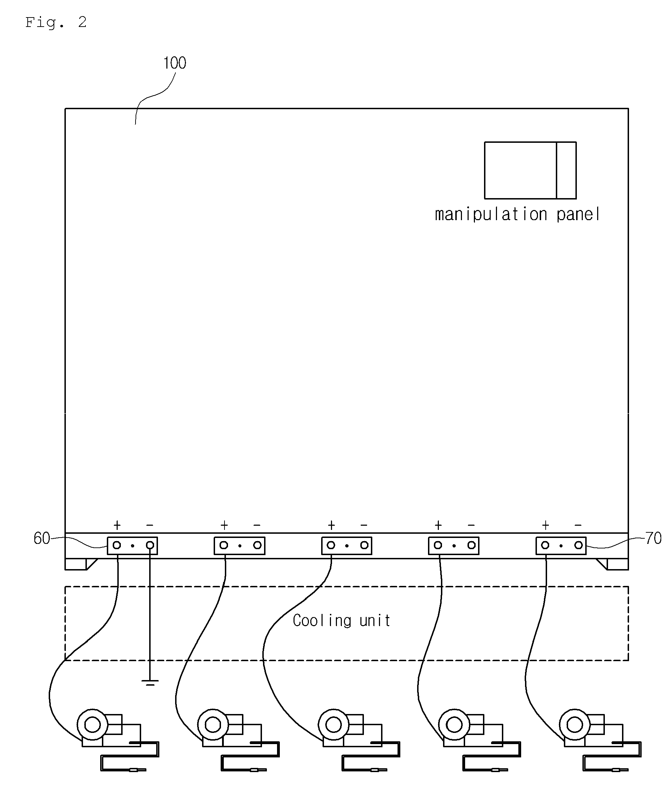

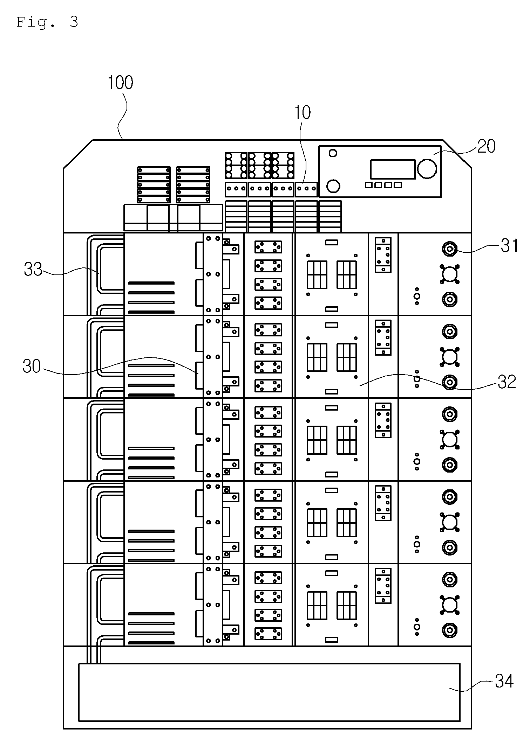

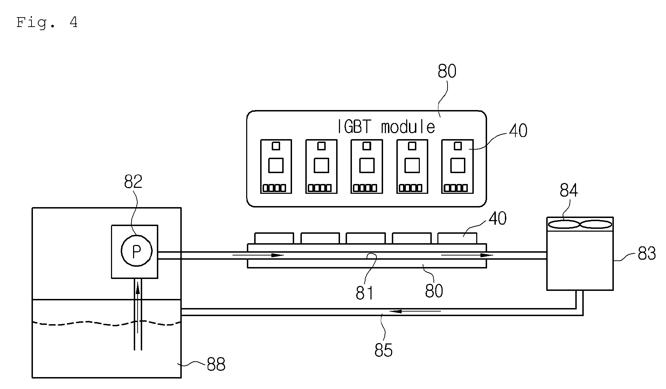

FIG.2 is a schematic view showing a configuration of a modular welding machine according to a first embodiment of the present invention, FIG.3 is a schematic view showing the internal configuration of the modular welding machine according to the first embodiment of the present invention, and FIG.4 is a schematic view showing a water-cooled system of the modular welding machine according to the first embodiment of the present invention.

As shown in FIGS. 2 to 4, a modular welding machine according to a first embodiment of the present invention is configured to provide a plurality of welding machines performing welding in multi positions, wherein the components constituting the respective welding machines are modularized into groups in such a manner as to be located on a single panel and the modularized welding machines are accommodated in a single casing 100.

That is, the modular welding machine is a CO₂ inverter welding machine that is used as a high frequency inverter type welding machine having excellent arc welding properties at the places where a large number of welding machines are used like shipbuilding factories or steel structure-making factories. Accordingly, a plurality of welding machines is modularized into the single box type casing 100, thus reducing the number of components for each welding machine to lower the manufacturing cost of the welding machine, reducing the power cost consumed for welding through the high efficiency welding machine, obtaining stable welding arc output properties, and improving a quality of welding and productivity.

The modular welding machine includes, in the single casing 100, a power supply module 10 for supplying control power having the capacity corresponding to the number of welding machines, a main controller 20 for controlling all welding properties, sub-control modules for individually controlling the welding machines, high frequency transformer modules 30 for controlling and supplying welding current and voltage, a reactor module for stabilizing output current, and output terminals for connecting wire feeders and torches.

Further, the modular welding machine includes a high frequency inverter module having a water-cooled pump 82 and a heat exchanger 83 adapted to cool the heat generated from a plurality of IGBT switching elements 40 in the process wherein a DC voltage is switched at a high speed to pulses and then converted into an AC voltage. Moreover, the modular welding machine includes, in the exterior of the casing 100, a plurality of welding output terminals 60 and a plurality of welding control terminals 70 having the corresponding numbers to the number of welding machines located in the interior of the casing 100, so that the wire feeders and torches are connected to the welding output terminals 60.

Further, the plurality of switching elements 40 comes into contact with at least one surface of a plate-shaped tube 80. The plate-shaped tube 80 takes a shape of a copper plate and has a passage 81 formed therein in such a manner as to flow water therealong. In this case, both ends of the plate-shaped tube 80 are connected to a cooling water line 85, and the water-cooled pump 82 and the heat exchanger 83 are disposed on the cooling water line 85. A cooling water tank 88 is disposed on the upper flow side of the water-cooled pump 82 to store cooling water temporarily, and a cooling fan 84 is located on at least one side of the heat exchanger 83.

Under the above-mentioned configuration, the cooling water flowing along the internal passage 81 of the plate-shaped tube 80 is heat-exchanged with the switching elements 40 coming into contact with the plate-shaped tube 80 to absorb the heat generated from the switching elements 40, and next, the cooling water is heat-exchanged with the external air and radiated through the heat exchanger 83 and the cooling fan 84 having the radiator structure. After that, the cooling water is circulated again through the water-cooled pump 82, thus providing a serial cooling system.

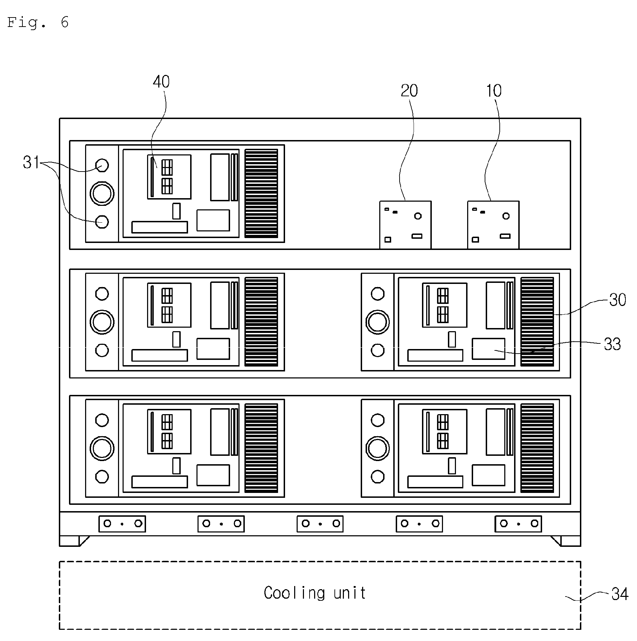

On the other hand, the internal structure of the casing 100 of the modular welding machine has racks on which the components of the individual welding machines are laminated, and in this case, the main controller 20 is one. Further, the IGBT switching elements 40 are water-cooled, and the number of fans corresponding to the number of welding machines is needed to cool the transformers. The whole welding machines are controlled by the main controller 20. In this case, a reference numeral 32 indicates a module type PCB, 31 indicates an output terminal, 33 indicates an air cooling unit, and 34 indicates a water cooling unit. FIG.6 is a schematic view showing the internal configuration of the modular welding machine of FIG.3, and the internal structure of the casing 100 may have a lamination structure as shown in FIG.6.

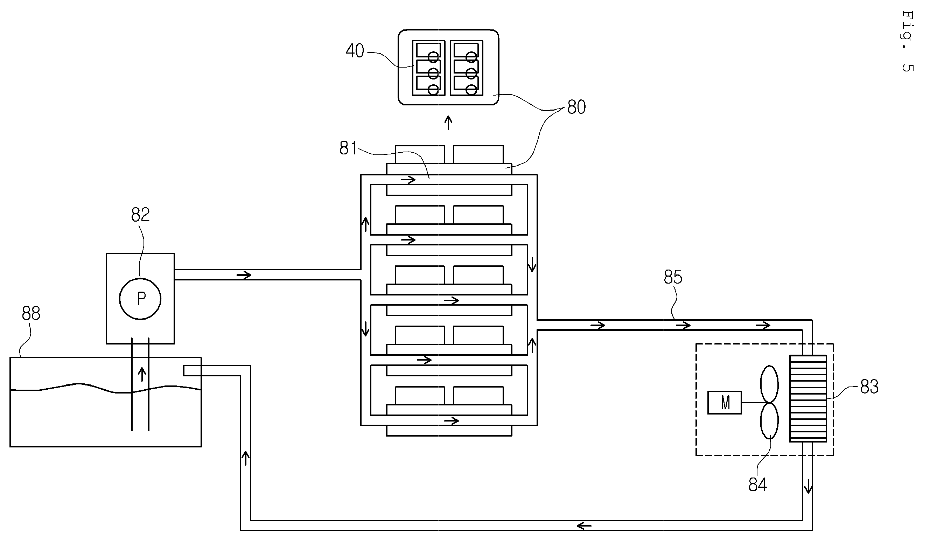

FIG.5 is a schematic view showing another water-cooled system of FIG.4. As shown in FIG.5, a plurality of plate-shaped tubes 80 is branched from the cooling water line 85 in parallel with each other to form a plurality of passages 81 therein, and the switching elements 40 are located on each plate-shaped tube 80. Accordingly, a more efficient cooling system is provided.

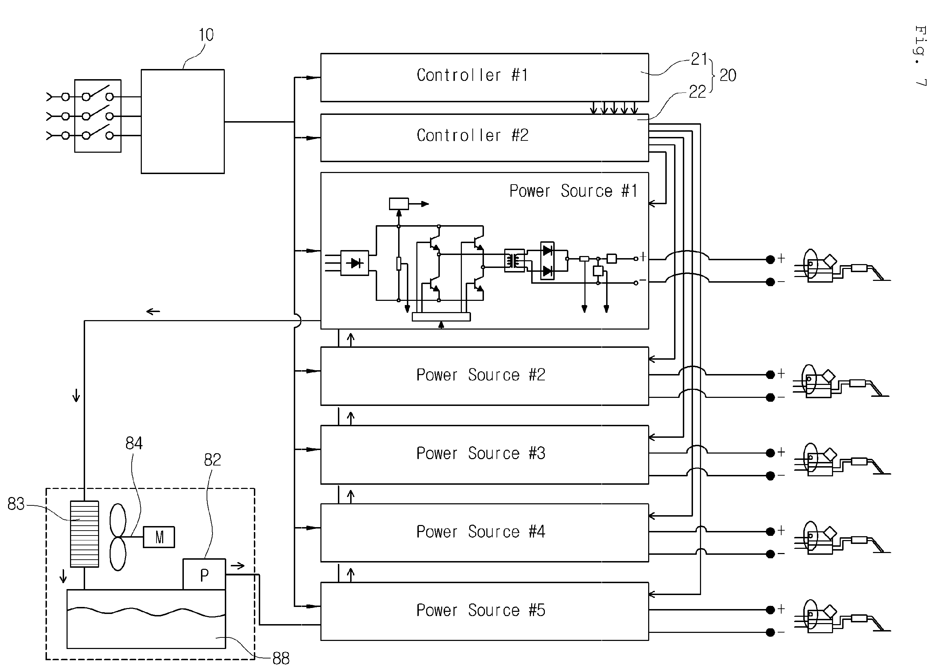

On the other hand, FIG.7 is a schematic view showing a configuration of a modular welding machine according to a second embodiment of the present invention. The modular welding machine according to the second embodiment of the present invention has the almost same configuration as according to the first embodiment of the present invention, except that the main controller is configured differently from the main controller in the first embodiment of the present invention. For the brevity of description, accordingly, only the configuration of the main controller will be discussed below.

Referring to FIG.7, a main controller 20 includes a first main controller 21 and a second main controller 22. In this case, if one of the first main controller 21 and the second main controller 22 is not operated, the other is operated. Otherwise, the first main controller 21 and the second main controller 22 are separated from a plurality of welding machines. Accordingly, if one of the first main controller 21 and the second main controller 22 is faulty, the other may be used. Further, size reduction, cost saving, and easy maintenance are obtained.

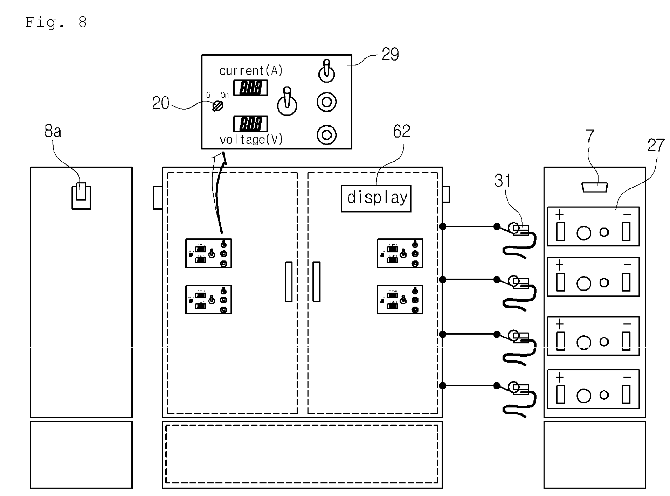

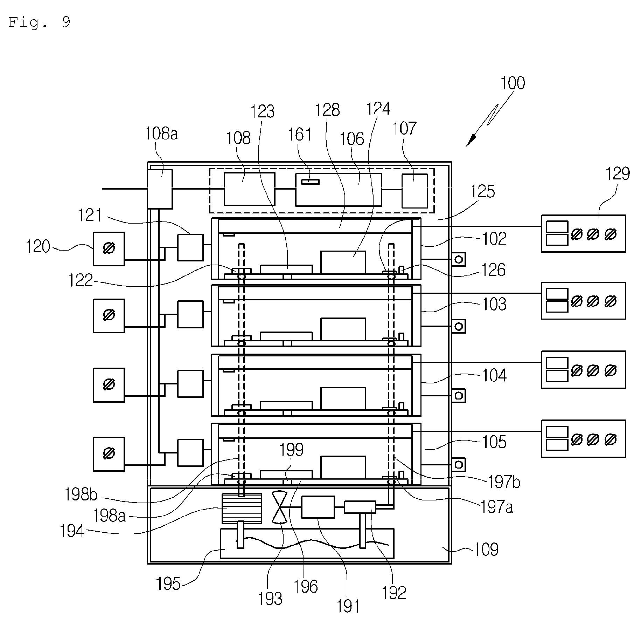

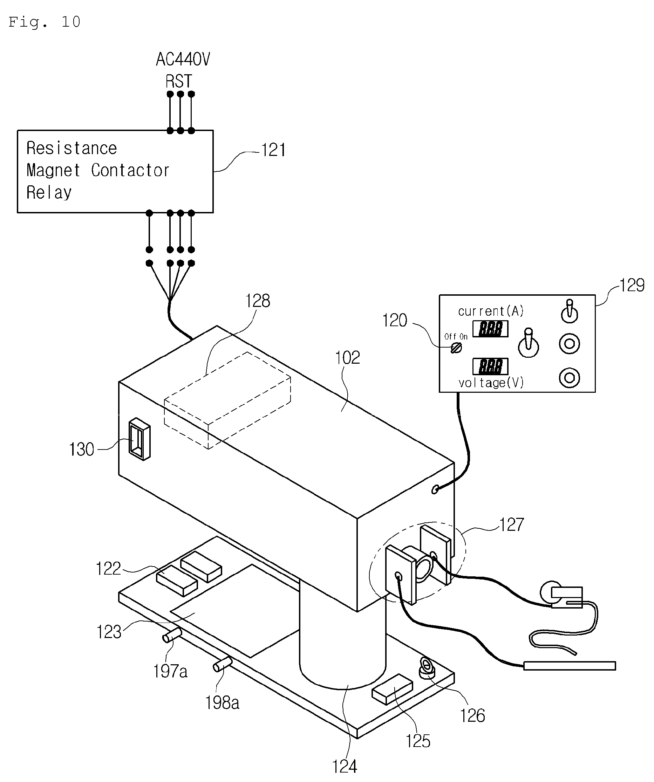

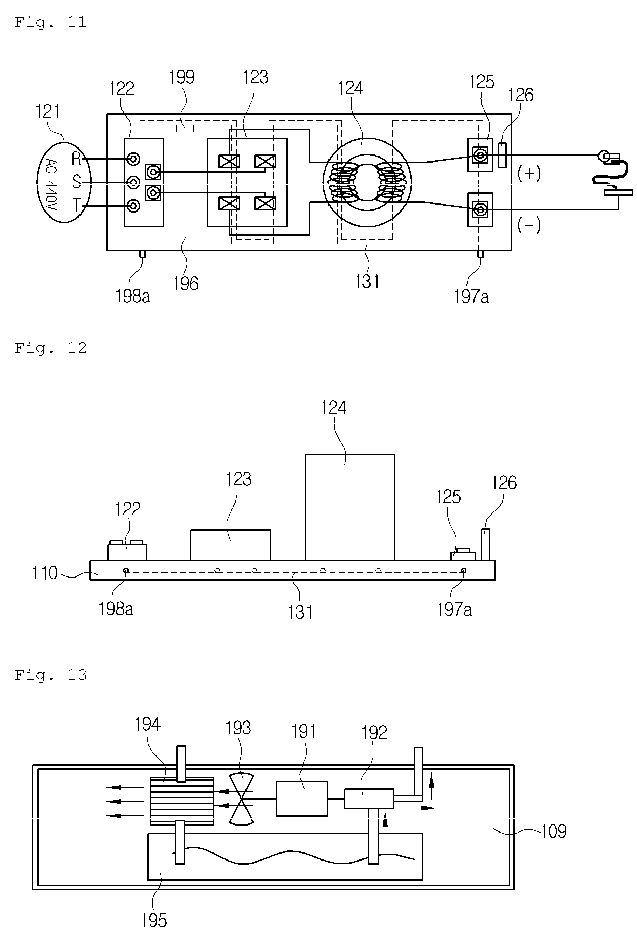

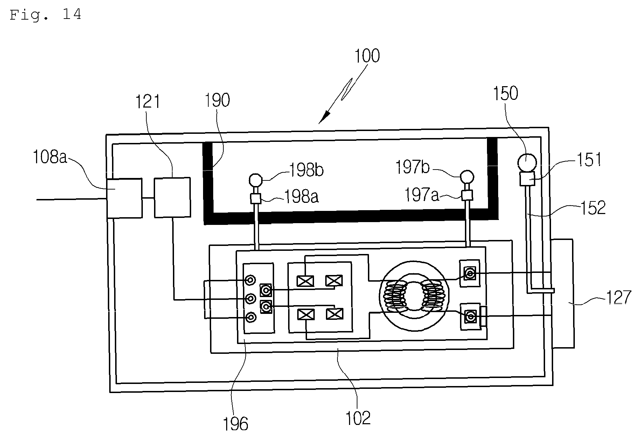

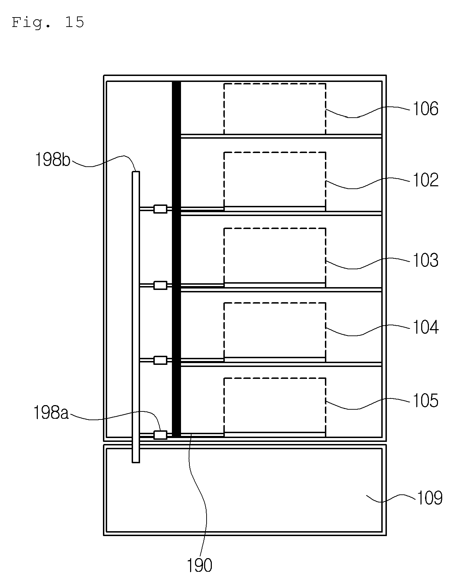

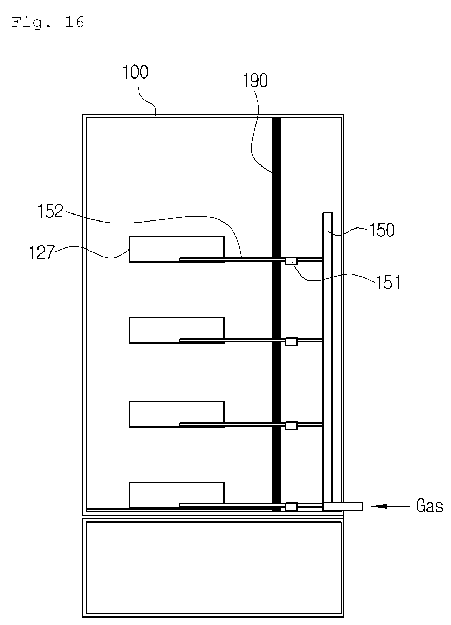

Further, FIG.8 is a front view showing an external configuration of a modular welding machine according to a third embodiment of the present invention, FIG.9 is a front view showing an internal configuration of the modular welding machine according to the third embodiment of the present invention, FIG.10 is a perspective view showing an individual welding machine module in the modular welding machine according to the third embodiment of the present invention, FIG.11 is a plan view showing the individual welding machine module in the modular welding machine according to the third embodiment of the present invention, FIG.12 is a front view showing the individual welding machine module in the modular welding machine according to the third embodiment of the present invention, FIG.13 is a schematic view showing a water-cooled unit in the modular welding machine according to the third embodiment of the present invention, FIG.14 is a plan view showing the internal configuration of the modular welding machine according to the third embodiment of the present invention, FIG.15 is a left side view showing the internal configuration of the modular welding machine according to the third embodiment of the present invention, and FIG.16 is a right side view showing the internal configuration of the modular welding machine according to the third embodiment of the present invention.

As shown in FIGS.8 to 16, a modular welding machine according to a third embodiment of the present invention is configured to perform a plurality of welding operations on multiple positions and includes a plurality of individual welding machine modules each having a water-cooled cooling plate 196 adapted to cool heat-generating components, the water-cooled cooling plate 196 having a passage formed to circulate cooling water. That is, the formation of the water-cooled cooling plate 196 enables the air-cooled way using the fans in the conventional practice to be replaced by the water-cooled way providing excellent cooling efficiencies, thus achieving the reduction of size and lightness of the welding machine.

In more detail, the modular welding machine includes a plurality of box-shaped individual welding machine modules 102, 103, 104 and 105. The individual welding machine modules 102, 103, 104 and 105 are accommodated in a single casing 100, and they have their respective cooling plates 196. Each cooling plate 196 has a passage 131 formed therein to circulate cooling water therealong, thus providing a water-cooled cooling system.

At this time, desirably, input diodes 122, an IGBT PCB 123, a water-cooled transformer 124, an output diode 125 and a current sensor 126, as components of each individual welding machine module, are sequentially disposed on the cooling plate 196. That is, the components are disposed in the order of power control on the cooling plate 196 so as to reduce the length of connection cables between the neighboring components. Further, the cooling plate 196 further includes a cooling plate temperature sensor 199 disposed thereon so as to sense a temperature of the cooling plate 196.

On the other hand, a cooling water passage may be formed along the intermediate portion in the interior of the cooling plate 196, so that the input diodes 122, the IGBT PCB 123, the water-cooled transformer 124, the output diode 125, the current sensor 126, and the cooling plate temperature sensor 199, as components of each individual welding machine module, are appropriately distributedly arranged on the cooling plate 196, thus more reducing the size of the individual welding machine module. For example, the input diodes 122 and the IGBT PCB 123 are disposed on top of the cooling plate 196 and the water-cooled transformer 124, the output diode 125 and the current sensor 126 on the underside of the cooling plate 196.

The individual welding machine modules desirably have a shape of a detachably mounted box on the casing 100. In more detail, each cooling plate 196 is provided with the input and output diodes 122 and 125 for performing the power conversion of the individual welding machine module, the IGBT PCB 123, the water-cooled transformer 124 taking a shape of a cylinder and having oil filled therein, the current sensor 126 for sensing output current, and the cooling plate temperature sensor 199 for sensing the temperature of the cooling plate 196. Further, each individual welding machine module includes, on the upper side thereof, an individual welding machine module controller 128, a main power supply part 121 for power supply, an on/off switch 120 disposed on the front surface of the casing 100, a connector 130 for inputting and outputting signals to and from control power supply, central controller, interface, other external devices and components, a terminal part 127 having output current +/- terminals and a control connector connected to an external wire feeder, and a manipulation panel 129 for manipulating the existence and non-existence of craters.

The small-sized and lightweight individual welding machine modules 102, 103, 104 and 105 are detachably mounted on the casing 100, and if they have faults, they are replaced with new ones.

The modular welding machine according to the third embodiment of the present invention includes a water cooling unit 109. The water cooling unit 109 has a double shaft motor 191, a water pump 192 connected to one shaft of the double shaft motor 191, a cooling fan 193 connected to the other shaft of the double shaft motor 191, a water tank 195 for storing cooling water, and a radiator 194 for radiating heat through the rotation of the cooling fan 193.

The cooling water flowing from the water tank 195 is supplied to the cooling plates 196 of the individual welding machine modules through an inlet distribution pipe 197b, circulated along the passages 131 of the cooling plates 196, passed through the radiator 194 through an outlet distribution pipe 198b, and finally collected to the water tank 195. The cooling water is mixed with antifreeze so as to prevent freezing, and a capacity of the water tank 195 and a size of the radiator 194 are determined appropriately upon the number of individual welding machine modules, thus performing efficient heat radiation and cooling water collection.

The cooling plates 196 and the water cooling unit 109 are connected with each other by means of a nipple 197a and a coupler 198a attached to the inlet distribution pipe 197b and the outlet distribution pipe 198b. The nipple 197a and the coupler 198a are separately coupled to the inlet distribution pipe 197b and the outlet distribution pipe 198b in one-touch way. Moreover, the modular welding machine further includes a sealing partition wall 190 formed at the inside of the casing 100, and the inlet distribution pipe 197b and the outlet distribution pipe 198b are located inside the sealing partition wall 190. Accordingly, if leakage occurs on the cooling water line, the nipple 197a and the coupler 198a are separated from the casing 100 of the modular welding machine, thus preventing the individual welding machine modules and the power part modules from being damaged due to the flowing of cooling water thereinto. Through the structure of the nipple 197a and the coupler 198a, further, the water cooling unit 109 can be easily detachably mounted on the cooling plates 196, and when the nipple 197a and the coupler 198a are separated from the inlet distribution pipe 197b and the outlet distribution pipe 198b, the leakage of the cooling water can be prevented.

Further, the modular welding machine according to the third embodiment of the present invention has a welding shielding gas supply structure. The welding shielding gas supply structure includes a welding shielding gas distribution pipe 150, solenoid valves 151 mounted on the welding shielding gas distribution pipe 150 at positions corresponding to the terminal parts 127 of the individual welding machine modules, and gas lines 152 connected from the terminal parts 127 to the external welding torches. The solenoid valves 151 connected to the individual welding machine module controllers 128 receive the on/off signals of the welding torches and operate according to the received signals. Accordingly, the individual welding machine modules are simplified in structure, thus reducing their size and weight.

As a result, the modular welding machine in which the water-cooled way is adopted is capable of achieving the miniaturization and lightweight in the individual welding machine modules, and further, control power supply parts 108 and 108a, an integrated controller 106, connectors 161 and 130 for connecting the integrated controller 106 and the individual welding machine modules, the main power supply parts 121, the on/off switches 120, the manipulation panels 129 each having individual welding machine module current/voltage displays and crater controller, the welding shielding gas distribution pipe 150, the solenoid valves 151, and the gas lines 152 may be integrated with each other, while being separated from the individual welding machine modules, thus allowing the individual welding machine modules are more simplified in structure and providing easy maintenance upon the occurrence of faults on the individual welding machine modules.

Further, the modular welding machine has an external data input/output part 107 for monitoring the operating states of the individual welding machine modules and remotely controlling them. Through the above-mentioned structures, the modular welding machine according to the present invention can achieve the reduction of manufacturing cost, the saving of welding power cost, the improvement of welding quality, the development of welding processes, and the improvement of productivity through welding intelligence, thus permitting the inverter welding machine having high performance and high efficiencies to be widely distributed.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A modular welding machine comprising a plurality of welding machines for performing welding in multiple positions, wherein components constituting the respective welding machines are modularized into groups in such a manner as to be located on a single panel and the modularized welding machines are accommodated in a single casing 100.

2. The modular welding machine according to claim 1, further comprising a high frequency inverter module having a water-cooled pump 82 and a heat exchanger 83 adapted to cool the heat generated from a plurality of switching elements 40 in the process wherein a DC voltage is switched at a high speed to pulses and then converted into an AC voltage.

3. The modular welding machine according to claim 1, further comprising: in the single casing 100, a power supply module 10 for supplying control power having the capacity corresponding to the number of welding machines; a main controller 20 for controlling all welding properties; a high frequency transformer module 30 for controlling and supplying welding current and voltage; a reactor module for stabilizing output current; and output terminals for connecting wire feeders and torches.

4. The modular welding machine according to claim 3, wherein the main controller 20 comprises a first main controller 21 and a second main controller 22, and if one of the first main controller 21 and the second main controller 22 is not operated, the other is operated, and otherwise, the first main controller 21 and the second main controller 22 are separated from the plurality of welding machines.

5. The modular welding machine according to claim 1, further comprising, in the exterior of the casing 100, a plurality of welding output terminals 60 and a plurality of welding control terminals 70 having the corresponding numbers to the number of welding machines located in the interior of the casing 100.

6. The modular welding machine according to claim 2, wherein the plurality of switching elements 40 comes into contact with at least one surface of a plate-shaped tube 80 having a passage 81 formed therein in such a manner as to flow water therealong, and both ends of the plate-shaped tube 80 are connected to a cooling water line 85 on which the water-cooled pump 82 and the heat exchanger 83 are disposed.

7. The modular welding machine according to claim 6, wherein a plurality of plate-shaped tubes 80 is branched from the cooling water line 85 in parallel with each other to form a plurality of passages 81 therein, and the switching elements 40 are located on each plate-shaped tube 80.

8. A modular welding machine comprising a plurality of individual welding machine modules for performing welding in multiple positions, wherein each individual welding machine module has a water-cooled cooling plate adapted to cool heat-generating components, the cooling plate having a passage formed therein to circulate cooling water therealong.

9. The modular welding machine according to claim 8, wherein the cooling plate comprises input diodes, an IGBT PCB, a water-cooled transformer, an output diode and a current sensor, as components of each individual welding machine module, disposed sequentially thereon.

10. The modular welding machine according to claim 9, wherein the cooling plate further comprises a cooling plate temperature sensor disposed thereon so as to sense a temperature of the cooling plate.

11. The modular welding machine according to claim 10, wherein the cooling plate comprises input diodes, an IGBT PCB, a water-cooled transformer, an output diode, a current sensor, and a cooling plate temperature sensor, as components of each individual welding machine module, distributedly arranged on both surfaces thereof.

12. The modular welding machine according to claim 8, wherein the individual welding machine modules have a shape of a detachably mounted box on a single casing.

13. The modular welding machine according to claim 8, further comprising a water cooling unit 109 having a double shaft motor 191, a water pump 192 connected to one shaft of the double shaft motor 191, a cooling fan 193 connected to the other shaft of the double shaft motor 191, a water tank 195 for storing cooling water, and a radiator 194 for radiating heat through the rotation of the cooling fan 193, wherein the cooling water flowing from the water tank 195 is supplied to the cooling plates 196 of the individual welding machine modules through an inlet distribution pipe 197b, circulated along the passages 131 of the cooling plates 196, passed through the radiator 194 through an outlet distribution pipe 198b, and collected to the water tank 195.

14. The modular welding machine according to claim 8, wherein the cooling plate 196 comprises the input and output diodes 122 and 125, the IGBT PCB 123, the water-cooled transformer 124 and the current sensor 126 attached thereto, and each individual welding machine module comprises an individual welding machine module controller 128, a main power supply part 121 for power supply, an on/off switch 120, a terminal part 127 having output current terminals, and a manipulation panel 129.

15. The modular welding machine according to claim 14, further comprising a welding shielding gas supply structure having a welding shielding gas distribution pipe 150, solenoid valves 151 mounted on the welding shielding gas distribution pipe 150 at positions corresponding to the terminal parts 127 of the individual welding machine modules, and gas lines 152 connected from the terminal parts 127 to the external welding torches, wherein the solenoid valves 151 connected to the individual welding machine module controllers 128 receive the on/off signals of the welding torches and operate according to the received signals.

16. The modular welding machine according to claim 13, wherein each cooling plate 196 and the water cooling unit 109 are connected with each other by means of a nipple 197a and a coupler 198a attached to the inlet distribution pipe 197b and the outlet distribution pipe 198b, and the inlet distribution pipe 197b and the outlet distribution pipe 198b are located inside a sealing partition wall 190 disposed at the inside of the casing 100.
